# EUROPÄISCHE PATENTSCHRIFT

(11) **EP 0 492 475 B1**
(45) Veröffentlichungstag und Bekanntmachung des Hinweises auf die Patenterteilung: **18.01.1995**
(21) Anmeldenummer: 91121867.5
(22) Anmeldetag: 19.12.1991
(51) Int. Cl.: C11B 3/00, A23L 1/015, A23D 9/04

(54) **Verfahren zur Entfernung von Cyclodextrin-Rückständen aus Fetten und Ölen**
Process for separating cyclodextrin residues from fats and oils
Procédé pour séparer des résidus de cyclodextrine à partir de graisses et d'huiles

(30) Priorität: 21.12.1990 DE 4041386
(43) Veröffentlichungstag der Anmeldung: 01.07.1992
(73) Patentinhaber: SKW Trostberg Aktiengesellschaft, 83308 Trostberg (DE)
(72) Erfinder: Cully, Jan, Dr., W-8268 Garching (DE); Kohlrausch, Utz, Dr., W-8223 Trostberg (DE); Vollbrecht, Heinz-Rüdiger, Dr., W-8226 Altenmarkt (DE)
(74) Vertreter: Huber, Bernhard, Dipl.-Chem.

(56) Entgegenhaltungen:
- EP-A- 0 439 075
- FR-A- 2 657 623
- TIBTECH Bd. 7, Januar 1989, CAMBRIDGE GB Seiten 2 - 4; R.BAR: 'Cyclodextrin-aided bioconversions and fermentations'
- WORLD PATENTS INDEX LATEST Section Ch, Week 8708, Derwent Publications Ltd.,
- London, GB; Class A, AN 87-054585

## Beschreibung

Die Erfindung betrifft ein Verfahren zur Entfernung von Cyclodextrin-Rückständen aus Fetten und Ölen, aus denen komplexierbare, unerwünschte Substanzen wie z.B. Sterole, insbesondere Cholesterin, freie Fettsäuren, Vitamine, Farbstoffe und sonstige Verunreinigungen mit Hilfe von Cyclodextrin entfernt worden sind und die noch einen bestimmten Restgehalt an Cyclodextrin aufweisen.

Es ist bekannt, daß erhöhte Cholesterinwerte im Blutserum des Menschen einen erhöhten Risikofaktor für Arteriosklerose bzw. einer koronaren Herzkrankheit darstellen. Aus diesem Grund zielen die Bestrebungen der Lebensmittelindustrie im wesentlichen darauf ab, eine deutliche Reduzierung des Cholesterins bzw. der Cholesterinester in fettreichen Lebensmitteln tierischen Ursprungs vorzunehmen, wobei ein wesentliches Problem dabei darin besteht, die sensorischen und ernährungsphysiologischen Eigenschaften der Lebensmittel weitgehend zu erhalten.

Ein relativ schonendes Verfahren zur Entfernung von Cholesterinderivaten stellt die Komplexierung dieser Substanzen mit β-Cyclodextrin und Abtrennung des gebildeten Komplexes dar.

Gemäß der EP-A 0 256 911 wird eine verflüssigte Fettmasse mit einem festen Cyclodextrin behandelt, wobei sich die Cholesterinwerte angeblich um bis zu 80 % vermindern lassen, wozu jedoch eine mehrmalige Cyclodextrin-Behandlung erforderlich ist.

Aus W. Schlenk, V.M. Sand in J. Am. Chem. Soc. 84, S. 2312 (1961) ist es bekannt, freie Fettsäuren mit Cyclodextrin zu komplexieren.

Ein wesentliches Problem bei diesen Verfahren ist die Tatsache, daß ein gewisser Teil des gelösten Cyclodextrins in den Fetten und Ölen zurückbleibt, wenn die bisher bekannten Methoden zur Abtrennung desselben angewendet werden. Normalerweise sind Cyclodextrine (α-, β-, γ-), die aus 6 bis 8 Glukoseeinheiten bestehende ringförmige Oligosaccharide darstellen, toxikologisch unbedenklich. So haben auch Tests zur akuten Toxizität an Mäusen und Ratten bei oraler Verabreichung keinerlei Hinweise auf eine toxische Wirkung ergeben. Trotzdem sind Cyclodextrine in zahlreichen Ländern bis jetzt als "food additive" nicht zugelassen.

Der Erfindung liegt daher die Aufgabe zugrunde, ein Verfahren zur Entfernung von Cyclodextrin-Rückständen aus Fetten und Ölen zur Verfügung zu stellen, welches ohne großen technischen Aufwand eine weitgehende und selektive Entfernung des Cyclodextrins aus dem behandelten Ausgangsmaterial ermöglicht.

Diese Aufgabe wird erfindungsgemäß dadurch gelöst, daß man die Cyclodextrin enthaltenden Fette und Öle in Wasser emulgiert und das Cyclodextrin mit Hilfe von wenigstens einer α-Amylase, ausgewählt aus den durch Mikroorganismen der Gruppe Aspergillus niger, Aspergillus oryzae, Bacillus polymyxa, Schweinepankreas-Amylase, Bacillus coagulans sowie Flavobacterium gebildeten α-Amylasen oder/und von vorzugsweise einer CTGase, ausgewählt aus den durch Bakterien der Gruppe Bacillus, Klebsiella, Micrococcus und alkalophilischen Bakterien gebildeten CTGasen enzymatisch abbaut.

Es hat sich überraschenderweise gezeigt, daß auf diese Weise ein praktisch vollständiger Abbau des Cyclodextrins in Fetten und Ölen in wirtschaftlich sinnvoller Weise erreicht werden kann. Dies ist überraschend, weil Cyclodextrine als potente Inhibitoren der α- und β-Amylasen beschrieben worden sind (R.J. Weselake, R.D. Hill, Cereal Chem. 60, S. 98, 1983) und gegen die meisten α- und β-Amylasen weitgehend resistent sind. Nunmehr wurde gefunden, daß einige wenige α-Amylase-Typen wie z.B. aus Bacillus polymyxa, Aspergillus oryzae oder Schweinepankreas-Amylase zwar in der Lage sind, Cyclodextrine zu hydrolysieren, jedoch mit geringen Geschwindigkeiten. Es war deshalb besonders überraschend und nicht vorhersehbar, daß diese Aktivität in Fett- und Ölemulsionen ausreichen würde, das Cyclodextrin relativ rasch und vollständig abzubauen.

Beim Verfahren der Erfindung wird das Ausgangsmaterial, bestehend aus Fetten und Ölen tierischen oder pflanzlichen Ursprungs, wie z.B. Butterfett, Schweine- und Rinderfett, Gänsefett, Fischöle, Sonnenblumenöle u.a., welches aufgrund einer Behandlung mit Cyclodextrin noch einen Restgehalt, beispielsweise 0,001 bis 1,0 Gew.-%, an Cyclodextrin aufweist, einer enzymatischen Behandlung unterworfen.

Vorzugsweise werden hierbei α-Amylasen, ausgewählt aus den durch Mikroorganismen der Gruppe Aspergillus niger, Aspergillus oryzae, Bacillus polymyxa, Schweinepankreas-Amylase, Bacillus coagulans sowie Flavobacterium gebildeten α-Amylasen eingesetzt. Aus der Gruppe der CTGasen (Cyclodextrin-Trans-Glycosylasen = EC 2.4.1.19) sind die durch Bakterien der Gruppe Bacillus (beispielsweise Bacillus macerans, Bacillus megaterium, Bacillus stearothermophilus, Bacillus circulans und Bacillus ohbensis), Klebsiella (z.B. pneumoniae), Micrococcus (z.B. varians) und alkalophilische Bakterien, beispielsweise Nr. 38-2 und 17-1 gebildeten CTGasen besonders geeignet. Die erwähnten Enzyme können auch nach Methoden der genetischen Manipulierung aus Wirtszellen anderer Herkunft exprimiert worden sein. Diese α-Amylasen bzw. CTGasen ermöglichen einen praktisch vollständigen Abbau des Cyclodextrins. Die erforderliche Menge an Enzym richtet sich im wesentlichen nach dem Ausgangsgehalt an Cyclodextrin im Fett oder Öl und beträgt bei der α-Amylase in der Regel 10 bis 500 FAU pro g zu entfernendes Cyclodextrin (1 FAU = Fungal α-Amylase Unit baut unter Standardbedingungen (Substrat: lösliche Stärke, Inkubationszeit 7 bis 20 Minuten, Temperatur 37°C, pH = 4,7) 5,2 g Stärke in einer Stunde ab). Im Falle der CTGasen werden diese vorzugsweise in einer Menge von 0,5 bis 20 U pro g zu entfernendes Cyclodextrin eingesetzt (1 Unit = Umwandlung von 1 µmol Substrat pro Minute). Man kann auch größere Mengen an Enzym zusetzen. Dies verringert aber im allgemeinen die Wirtschaftlichkeit, weil keine bessere Wirkung mehr damit verbunden ist. Gemäß einer bevorzugten Ausführungsform werden Gemische von α-Amylase und CTGase verwendet.

Es ist erfindungswesentlich, das Fett oder Öl in Form einer Öl-Wasser-Emulsion einzusetzen. Zu diesem Zweck wird das Ausgangsmaterial, gegebenenfalls nach dessen Verflüssigung, in Wasser emulgiert, wobei man vorzugsweise pro kg Fett oder Öl 0,1 bis 5 kg Wasser zusetzt. Das Wasser kann die α-Amylase oder/und CTGase bereits enthalten. Das Enzym kann aber auch erst der gebildeten Emulsion zugesetzt werden. Vor der Zugabe des Enzyms wird vorzugsweise der pH-Wert des Wassers oder der Emulsion in den für das verwendete Enzym günstigen, insbesondere optimalen Bereich eingestellt. Die pH-Einstellung erfolgt vorzugsweise mit Puffersubstanzen, jedoch können auch einfach Säuren oder Basen, insbesondere eßbare Substanzen, wie z.B. Zitronensäure, Milchsäure und Salze derselben verwendet werden. Gegebenenfalls werden der Emulsion noch Kofaktoren, wie zweiwertige Ionen (z.B. Calcium, Magnesium) in Spuren zugegeben. Außerdem können den CTGasen noch Akzeptoren wie z.B. Glucose zugemischt werden.

Die Behandlungsbedingungen wie Temperatur und Zeitdauer können in gewissen Grenzen variiert werden, doch sollten sich die Fette und Öle in der flüssigen Phase befinden, d.h. man sollte den enzymatischen Abbau zwischen dem Schmelzpunkt des jeweiligen Fettes oder Öles und 70°C durchführen. Vorzugsweise betragen die Temperaturen für den enzymatischen Abbau 25 bis 55°C, wobei Behandlungszeiten von 1 bis 5 Stunden üblich sind.

Mit Hilfe des erfindungsgemäßen Verfahrens ist in technisch besonders einfacher Weise eine weitgehende und selektive Entfernung des Cyclodextrins aus dem behandelten Fett oder Öl möglich, wobei die Restcyclodextrin-Gehalte unter einer Nachweisgrenze von < 10 ppm liegen.

Die nachfolgenden Beispiele sollen die Erfindung näher erläutern.

### Beispiel 1

Zu 1 kg mit β-Cyclodextrin vorbehandeltem Fischöl mit einem β-Cyclodextrin-Restgehalt von 150 ppm wurde 1 kg Wasser zugemischt und bei 40°C emulgiert. Der pH-Wert der Emulsion wurde mit Zitronensäure auf 5,5 eingestellt. Anschließend wurden 50 FAU eines α-Amylase-Gemisches aus Aspergillus oryzae in Form des kommerziell erhältlichen Produktes Fungamyl 800 (Fa. Novo) zugegeben.

Nach zweistündiger Inkubation bei 40°C konnte β-Cyclodextrin nicht mehr nachgewiesen werden (Detektionslimit 10 ppm).

### Beispiel 2

1 kg eines mit β-Cyclodextrin vorbehandelten Butteröls mit einem β-Cyclodextrin-Restgehalt von 2500 ppm wurde in 1 kg Wasser bei 50°C emulgiert. Der pH-Wert der Emulsion wurde mit Zitronensäure auf 6,2 eingestellt und bei 50°C mit 250 FAU einer α-Amylase aus Bacillus coagulans (nicht gereinigtes Präparat) 2 Stunden lang inkubiert. Nach dieser Behandlung konnte β-Cyclodextrin nicht mehr nachgewiesen werden (Detektionslimit 10 ppm).

### Beispiel 3

1 kg Rindertalg mit 200 ppm α-Cyclodextrin-Restgehalt wurde in einer 5 mmol/l CaSO₄-Lösung bei 40°C emulgiert und der pH-Wert mit Zitronensäure auf 6,5 eingestellt. Anschließend wurden der Emulsion 5 g Glucose und 20 U einer CTGase von Bacillus macerans zugegeben. Nach einer 2,5-stündigen Inkubation bei 40°C konnte α-Cyclodextrin nicht mehr nachgewiesen werden (Detektionslimit 10 ppm).

## Patentansprüche

1. Verfahren zur Entfernung von Cyclodextrin-Rückständen aus Fetten und Ölen,
**dadurch gekennzeichnet,**
daß man die Fette und Öle in Wasser emulgiert und das Cyclodextrin mit Hilfe von wenigstens einer α-Amylase, ausgewählt aus den durch Mikroorganismen der Gruppe Aspergillus niger, Aspergillus oryzae, Bacillus polymyxa, Schweinepankreas-Amylase, Bacillus coagulans sowie Flavobacterium gebildeten α-Amylasen oder/und von vorzugsweise einer CTGase, ausgewählt aus den durch Bakterien der Gruppe Bacillus, Klebsiella, Micrococcus und alkalophilischen Bakterien gebildeten CTGasen enzymatisch abbaut.

2. Verfahren nach den Ansprüchen 1,
**dadurch gekennzeichnet,**
daß man die α-Amylase in einer Menge von 10 bis 500 FAU pro g zu entfernendes Cyclodextrin verwendet.

3. Verfahren nach Anspruch 1,
**dadurch gekennzeichnet,**
daß man CTGase in einer Menge von 0,5 bis 20 U pro g zu entfernendes Cyclodextrin verwendet.

4. Verfahren nach Anspruch 1 oder 2,
**dadurch gekennzeichnet,**
daß man den enzymatischen Abbau bei einer Temperatur durchführt, die zwischen dem Schmelzpunkt der Fette bzw. Öle und 70°C liegt.

5. Verfahren nach einem der Ansprüche 1 bis 3,
**dadurch gekennzeichnet,**
daß man den enzymatischen Abbau bei einer Temperatur von 25 bis 55°C vornimmt.

6. Verfahren nach einem der vorhergehenden Ansprüche,
**dadurch gekennzeichnet,**
daß man pro Gewichtsteil Fett oder Öl mit 0,1 bis 5 Gewichtsteilen Wasser emulgiert.

## Claims

1. Process for the removal of cyclodextrin residues from fats and oils, characterised in that one emulsifies the fats and oils in water and enzymatically breaks down the cyclodextrin with the help of at least one α-amylase selected from the α-amylases formed by micro-organisms of the group Aspergillus niger, Aspergillus oryzae, Bacillus polymyxa, hog pancreatic amylase, Bacillus coagulans, as well as Flavobacterium and/or preferably of a CTGase selected from the CTGases formed by bacteria of the group Bacillus, Klebsiella, Micrococcus and alkalophilic bacteria.

2. Process according to claim 1, characterised in that one uses the α-amylase in an amount of 10 to 500 FAU. per g of cyclodextrin to be removed.

3. Process according to claim 1, characterised in that one uses CTGase in an amount of 0.5 to 20 U per g of cyclodextrin to be removed.

4. Process according to claim 1 or 2, characterised in that one carries out the enzymatic decomposition at a temperature which lies between the melting point of the fat or oil and 70°C.

5. Process according to one of claims 1 to 3, characterised in that one carries out the enzymatic decomposition at a temperature of 25 to 55°C.

6. Process according to one of the preceding claims, characterised in that, per part by weight of fat or oil, one emulsifies with 0.1 to 5 parts by weight of water.

## Revendications

1. Procédé pour la séparation de résidus de cyclodextrine à partir de matières grasses et d'huiles, caractérisé en ce que l'on décompose par voie enzymatique à l'aide d'au moins une α-amylase choisie parmi les α-amylases formées par des microorganismes du groupe aspergillus niger, aspergillus oryzae, bacillus polymyxa, amylase de pancréas de porc, bacillus coagulans ainsi que flovobactérium ou/et à partir de préférence une CTGase, choisie parmi les CTGases formées par les bactéries du groupe Bacillus, klebsiella, micrococcus et les bactéries alcalophiles.

2. Procédé selon la revendication 1, caractérisé en ce que l'on utilise l'α-amylase dans une quantité de 10 à 500 FAU par g de cyclodextrine à séparer.

3. Procédé selon la revendication 1, caractérisé en ce que l'on utilise la CTGase dans une quantité de 0,5 à 20 U par g de cyclodextrine à séparer.

4. Procédé selon la revendication 1 ou 2, caractérisé en ce que l'on effectue la décomposition enzymatique à une température qui se situe entre le point de fusion des matières grasses et des huiles et 70°C.

5. Procédé selon l'une des revendications 1 à 3, caractérisé en ce que l'on procède à la décomposition enzymatique à une température de 25 à 55°C.

6. Procédé selon l'une des revendications précédentes, caractérisé en ce que l'on procède à l'émulsion par partie en poids de matières grasses ou d'huiles avec 0,1 à 5 parties en poids d'eau.
